# EUROPÄISCHE PATENTANMELDUNG

(11) **EP 2 233 019 A2**
(43) Veröffentlichungstag der Anmeldung: **29.09.2010**
(21) Anmeldenummer: 10003143.4
(22) Anmeldetag: 24.03.2010
(51) Int. Cl.: A41H 1/02, G01B 3/10

(54) **Vorrichtung zur Bestimmung von individuellen Kleiderangaben und Verfahren**

(30) Priorität: 24.03.2009 DE 102009014139
(71) Anmelder: Susac, Kamila, 63796 Kahl am Main (DE)
(72) Erfinder: Susac, Kamila, 63796 Kahl am Main (DE)
(74) Vertreter: Thürer, Andreas

(57) **Zusammenfassung**

Verfahren zur Bestimmung von individuellen Kleidungsangaben wobei eine Vorrichtung (3) eingesetzt wird und ein Bandmittel (1) ausgezogen wird und zugeordnete Positionsmesswerte des Bandmittels (1) mittels eines Sensormittels (2) erfasst werden, insbesondere korrespondierend mit vorbestimmten Längen, insbesondere des Körpers, insbesondere Körperhöhe und/oder Brustumfang und/oder Beinlänge und/oder Armlänge und/oder Kopfumfang und/oder Fußlänge und/oder Fußbreite und/oder Handlänge, wobei insbesondere wobei mittels eines vorbestimmten Startsignals, insbesondere die Eingabe einer Bestätigung, ein Beginn der Bestimmung eingeleitet wird und durch ein vorbestimmtes Endsignal ein Ende der Bestimmung.

## Beschreibung

Die Erfindung betrifft Vorrichtung und ein Verfahren zur Bestimmung von individuellen Kleidungsangaben.

Bekannt ist es, die Kleidungsgröße abzuschätzen oder aufwändig über Größentabellen festzustellen.

Diese Bestimmung ist ungenau oder erfordert eine große Erfahrung, wobei Fehleinschätzungen häufig sind und zu teuren Kleidungsumtausch führen können.

Aufgabe der vorliegenden Erfindung ist es, eine einfache und zuverlässige Bestimmung von Kleiderangaben zu liefern.

Die Aufgabe wird gelöst durch eine Vorrichtung zur Bestimmung von individuellen Kleidungsangaben, umfassend: ein Bandmittel und ein Sensormittel zum Erfassen von dem Bandmittel zugeordneten Längenmesswerten, insbesondere korrespondierend mit vorbestimmten Längen, insbesondere des Körpers, insbesondere Körperhöhe und/oder Brustumfang und/oder Beinlänge und/oder Armlänge und/oder Kopfumfang und/oder Fußlänge und/oder Fußbreite und/oder Handlänge.

Durch die Erfindung wird die Messung von Längen am Körper und die entsprechende Bestimmung der Kleidungsgrößen sehr vereinfacht, da es grundsätzlich durch eine einfache Eingabe und das Ausziehen des Bandmittels eine Bestimmung der Kleidergröße möglich ist. Die Bestimmung ist reproduzierbar und schnell vorzunehmen.

Vorteilhaft ist es, wenn das Sensormittel eine positionsempfindliche Fotodiode ist, die derart angeordnet ist, dass sie einen durch das Bandmittel an vorbestimmten Stellen reflektierten Lichtstrahl eines Lichtmittels, insbesondere einen Laserstrahl, insbesondere eines Diodenlasers, erfasst.

Vorteilhaft ist es, wenn das Bandmittel mit überwiegend reflektierenden und überwiegend nicht-reflektierenden Bereichen ausgestattet ist, die insbesondere regelmäßig abwechselnd angeordnet sind, wobei insbesondere die entsprechenden Größen der Bereiche in einer Auswerteeinrichtung gespeichert sind und den Messungen des Sensormittels zuzuordnen sind.

Vorteilhaft ist es, wenn die Sensormittel über das Prinzip der Triangulation arbeiten.

Vorteilhaft ist es, wenn der Auszug des Bandes über eine Lichtschranke zu registrieren ist.

Vorteilhaft ist es, wenn das Sensormittel die Auszugslänge des Bandmittels durch einen Winkelmesser erfasst, der insbesondere einem Rollenmittel zugeordnet ist, durch das das Bandmittel verläuft und/oder auf das das Bandmittel aufgerollt ist und/oder von dem es abgerollt wird.

Vorteilhaft ist es, wenn eine Eingabevorrichtung für Personenangaben vorgesehen ist, insbesondere erfassend Geschlecht und/oder Alter und/oder Kleidungsstückwunsch, und einer Ausgabevorrichtung für die individuellen Kleidungsangaben, insbesondere die Kleidungsgröße und/oder die Hutgröße und/oder die Schuhgröße.

Vorteilhaft ist es, wenn korrespondierend zu den Abfragen zur Erfassung vorbestimmter Längen Positionsangaben zum Ansetzen des Bandmittels am jeweiligen Körper ausgegeben werden.

Vorteilhaft ist es, wenn die Messwerte des Sensormittels jeweils in bezug zu den Positionsangaben abgespeichert werden.

Vorteilhaft ist es, wenn in Abhängigkeit vom eingegebenen Kleidungsstück und/oder Geschlecht und/oder Alter vorbestimmte Abfragen zur Erfassung von vorbestimmten Längen ausgegeben werden.

Vorteilhaft ist es, wenn in Abhängigkeit vom eingegebenen Kleidungsstück und/oder Geschlecht und/oder Alter vorbestimmte Eingaben zur Erfassung von vorbestimmten Längen aufgenommen werden.

Vorteilhaft ist es, wenn nach einem Einrasten des Bandmittels in einer Halterung und/oder nach dem Ablauf einer vorbestimmten Haltezeit, insbesondere etwa 3 Sekunden, der Längenmesswert an ein Größenermittlungsprogramm weiterzugeben und zu verarbeiten ist.

Vorteilhaft ist es, wenn die Datenspeicherung über eine Zwischenspeicherung erfolgt und erst anschließend eine Verarbeitung erfolgt.

Vorteilhaft ist es, wenn die ermittelten und berechneten Werte auf einem tragbaren Speicher auszugeben sind.

Die Aufgabe wird ebenfalls gelöst durch ein Verfahren zur Bestimmung von individuellen Kleidungsangaben wobei eine Vorrichtung nach einem der Ansprüche 1 bis 14 eingesetzt wird und ein Bandmittel ausgezogen wird und zugeordnete Positionsmesswerte des Bandmittels mittels eines Sensormittels erfasst werden, insbesondere korrespondierend mit vorbestimmten Längen, insbesondere des Körpers, insbesondere Körperhöhe und/oder Brustumfang und/oder Beinlänge und/oder Armlänge und/oder Kopfumfang und/oder Fußlänge und/oder Fußbreite und/oder Handlänge, wobei insbesondere wobei mittels eines vorbestimmten Startsignals, insbesondere die Eingabe einer Bestätigung, ein Beginn der Bestimmung eingeleitet wird und durch ein vorbestimmtes Endsignal ein Ende der Bestimmung.

Vorteilhaft ist es, wenn das Sensormittel insbesondere in Form einer Fotodiode einen durch das Bandmittel an vorbestimmten Stellen reflektierten Lichtstrahl eines Lichtmittels, insbesondere einen Laserstrahl, insbesondere eines Diodenlasers, erfasst.

Vorteilhaft ist es, wenn das Bandmittel mit überwiegend reflektierenden und überwiegend nicht-reflektierenden Bereichen ausgestattet ist, die insbesondere regelmäßig abwechselnd angeordnet sind, wobei insbesondere die entsprechenden Größen der Bereiche in einer Auswerteeinrichtung gespeichert sind und den Messungen des Sensormittels zugeordnen werden.

Vorteilhaft ist es, wenn die Sensormittel über das Prinzip der Triangulation arbeiten.

Vorteilhaft ist es, wenn der Auszug des Bandes Ober eine Lichtschranke registriert wird.

Vorteilhaft ist es, wenn das Sensormittel die Auszugslänge des Bandmittels durch einen Winkelmesser erfasst, der insbesondere einem Rollenmittel zugeordnet wird, durch das das Bandmittel verläuft und/oder auf das das Bandmittel aufgerollt ist und/oder von dem es abgerollt wird.

Vorteilhaft ist es, wenn in eine Eingabevorrichtung Personenangaben eingegeben werden, insbesondere Geschlecht und/oder Alter und/oder Kleidungsstückwunsch, und aus einer Ausgabevorrichtung die individuellen Kleidungsangaben ausgegeben werden, insbesondere die Kleidungsgröße und/oder die Hutgröße und/oder die Schuhgröße.

Vorteilhaft ist es, wenn korrespondierend zu den Abfragen zur Erfassung vorbestimmter Längen Positionsangaben zum Ansetzen des Bandmittels am jeweiligen Körper ausgegeben werden.

Vorteilhaft ist es, wenn die Messwerte des Sensormittels jeweils in bezug zu den Positionsangaben abgespeichert werden.

Vorteilhaft ist es, wenn in Abhängigkeit vom eingegebenen Kleidungsstück und/oder Geschlecht und/oder Alter vorbestimmte Abfragen zur Erfassung von vorbestimmten Längen ausgegeben werden.

Vorteilhaft ist es, wenn in Abhängigkeit vom eingegebenen Kleidungsstück und/oder Geschlecht und/oder Alter vorbestimmte Eingaben zur Erfassung von vorbestimmten Längen aufgenommen werden.

Vorteilhaft ist es, wenn nach einem Einrasten des Bandmittels in einer Halterung und/oder das Endsignal dadurch gegeben ist, dass nach dem Ablauf einer vorbestimmten Haltezeit, insbesondere etwa 3 Sekunden, der Längenmesswert an ein Größenermittlungsprogramm weitergegeben und verarbeitet wird.

Vorteilhaft ist es, wenn die Datenspeicherung über eine Zwischenspeicherung erfolgt und erst anschließend eine Verarbeitung erfolgt.

Vorteilhaft ist es, wenn die ermittelten und berechneten Werte auf einem tragbaren Speicher ausgegeben werden.

Weitere Merkmale und Vorteile der Erfindung ergeben sich aus den Ansprüchen und der nachstehenden Beschreibung, in der Ausführungsbeispiele des Gegenstands der Erfindung in Verbindung mit den Zeichnungen näher erläutert sind.

### Es zeigen:

- Fig. 1: eine schematische Darstellung einer Vorrichtung zum Messen,
- Fig. 2: eine schematische Darstellung eines Messvorgangs.

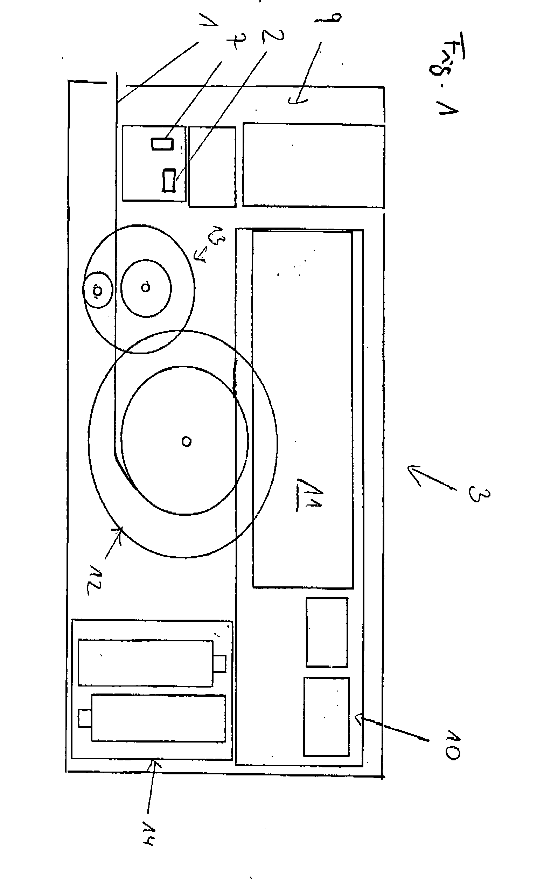

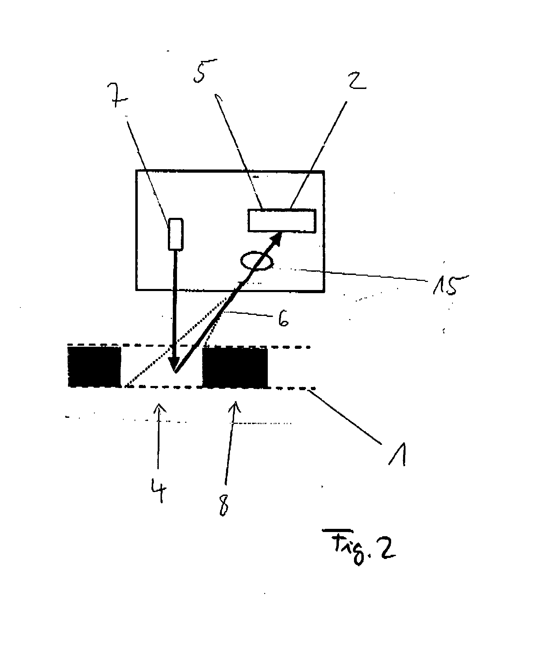

Fig. 1 zeigt eine schematische Darstellung einer Vorrichtung 3 zum Messen. Ein Bandmittel 1 ist auf eine Rolle 12 aufgerollte und ist über eine zweite Rolle 13 geführt ausziehbar. Auf seiner Oberfläche ist das bandmittel mit reflektierenden und weniger reflektierenden Bereichen 8 versehen. Das Bandmittel 1 wird beim Ausziehen und/oder Zurückführen mit diesen Bereichen 8 an einem Lichtmittel 7 und einem korrespondierenden Sensormittel 2 vorbeigeführt. Die Einrichtung ist in Figur 2 genauer dargestellt. Dabei wird durch ein vorbestimmtes Startsignal, insbesondere die Eingabe einer Bestätigung an einer Eingabevorrichtung 10, ein Start der Messung eingeleitet wird und nach dem Ausziehen insbesondere durch ein vorbestimmtes Einrasten und/oder eine vorbestimmte Haltezeit ein Endsignal zum Ende der Bestimmung gegeben wird. Der sich ergebende Messwert, also insbesondere die Anzahl der festgestellten Bereiche, in denen eine gute Reflexion stattgefunden hat, wird dann in der Auswertevorrichtung 9 mit den eingegebenen Längen für die jeweiligen Bereiche 8 abgeglichen und somit eine Gesamtauszugslänge berechnet. Die sich ergebenden Kleidungsinformationen können dann an einer Ausgabevorrichtung 11, insbesondere einem Display ausgegeben werden. Gespeist wird die Vorrichtung insbesondere durch eine Energieversorgung 14. Vorteilhaft kann die Versorgung über einen Akku erfolgen, der durch das vermessen aufgeladen werden kann, insbesondere über ein Solarelement. Nach dem Einschaltend es Geräts kann auch das Display eingeschaltet werden. Die Menüauswahl kann insbesondere mit Abbildern und Texten erfolgen. Dabei sind gespeicherte Daten zu verschiedenen Personen oder Abfragen zu verschiedenen Kleidungsstücken vorsehbar. Zunächst kann eine Personenauswahl erfolgen, sodann eine Kleidungsstückauswahl, gefolgt beispielsweise von dem Hinweis, nunmehr die Körperhöhe zu messen, sowie beispielsweise der Messung des Brustumfangs. Sodann kann die Größe ausgerechnet und ausgegeben werden, die dann abgespeichert werden kann. Zur Größenbestimmung wird der Auszug des Bandmittels 1 beispielsweise über eine Lichtschranke registriert. Die sensormittel in Form von Abstandssensoren arbeiten nach dem Prinzip der Triangulation und sind insbesondere mit einer positionsempfindlichen Photodiode ausgestattet.

Fig. 2 zeigt eine schematische Darstellung eines Messvorgangs. Das Lichtmittel 7 sendet einen Lichtstrahl auf das bandmittel 1, der von einem reflektierenden Bereich als reflektierter Strahl zurückgesendet wird und von einem Sensormittel 2, insbesondere einer Photodiode 5 empfangen wird. Eine vorgeschaltete Linse 15 kann die Strahlen zuvor bündeln und somit die Stärke des empfangenen Lichts verbessern.

Das Bandmittel 1 wird an dem Lichtmittel 7 und dem Sensormittel 2 vorbeigezogen und somit durch seine unterschiedlichen Bereiche 8 Messwerte 4 aus einer insbesondere abwechselnden Reflektion und fehlenden oder verminderten Reflektion erzeugt. Diese Messwerte werden dann in der Auswertevorrichtung 9 mit einer vorbestimmten Länge der Abstände der Reflektierenden Bereiche verglichen und eine Gesamtlänge berechnet, die mit den jeweiligen Eingaben in der Eingabevorrichtung korrespondieren.

### BEZUGSZEICHENLISTE

- 1: Bandmittel
- 2: Sensormittel
- 3: Vorrichtung
- 4: Positionsmesswert
- 5: Fotodiode
- 6: Lichtstrahl
- 7: Lichtmittel
- 8: Bereich
- 9: Auswerteeinrichtung
- 10: Eingabevorrichtung
- 11: Ausgabevorrichtung
- 12: Rolle
- 13: Rolle
- 14: Energieversorgung
- 15: Linse

## Patentansprüche

1. Vorrichtung (3) zur Bestimmung von individuellen Kleidungsangaben, umfassend: ein Bandmittel (1) und ein Sensormittel (2) zum Erfassen von dem Bandmittel (1) zugeordneten Positionsmesswerten (4), insbesondere korrespondierend mit vorbestimmten Längen, insbesondere des Körpers, insbesondere Körperhöhe und/oder Brustumfang und/oder Beinlänge und/oder Armlänge und/oder Kopfumfang und/oder Fußlänge und/oder Fußbreite und/oder Handlänge.

2. Vorrichtung nach Anspruch 1, **dadurch gekennzeichnet, dass** das Sensormittel (2) eine positionsempfindliche Fotodiode (5) ist, die derart angeordnet ist, dass sie einen durch das Bandmittel (1) an vorbestimmten Stellen reflektierten Lichtstrahl (6) eines Lichtmittels (7), insbesondere einen Laserstrahl, insbesondere eines Diodenlasers, erfasst.

3. Vorrichtung nach Anspruch 1 oder 2, **dadurch gekennzeichnet, dass** das Bandmittel (1) mit überwiegend reflektierenden und überwiegend nicht-reflektierenden Bereichen (8) ausgestattet ist, die insbesondere regelmäßig abwechselnd angeordnet sind, wobei insbesondere die entsprechenden Größen der Bereiche in einer Auswerteeinrichtung (9) gespeichert sind und den Messungen des Sensormittels (2) zuzuordnen sind.

4. Vorrichtung nach einem der Ansprüche 1 bis 3, **dadurch gekennzeichnet, dass** die Sensormittel (2) über das Prinzip der Triangulation arbeiten und/der dass der Auszug des Bandmittels (1) Ober eine Lichtschranke zu registrieren ist und/oder dass das Sensormittel (2) die Auszugslänge des Bandmittels (1) durch einen Winkelmesser erfasst, der insbesondere einem Rollenmittel zugeordnet ist, durch das das Bandmittel (1) verläuft und/oder auf das das Bandmittel (1) aufgerollt ist und/oder von dem es abgerollt wird.

5. Vorrichtung nach einem der Ansprüche 1 bis 4, **dadurch gekennzeichnet, dass** eine Eingabevorrichtung (10) für Personenangaben vorgesehen ist, insbesondere erfassend Geschlecht und/oder Alter und/oder Kleidungsstückwunsch, und einer Ausgabevorrichtung (11) insbesondere für die individuellen Kleidungsangaben, insbesondere die Kleidungsgröße und/oder die Hutgröße und/oder die Schuhgröße, und/oder dass insbesondere korrespondierend zu den Abfragen zur Erfassung vorbestimmter Längen Positionsangaben zum Ansetzen des Bandmittels (1) am jeweiligen Körper ausgegeben werden, und/oder insbesondere Messwerte des Sensormittels (2) jeweils in bezug zu den Positionsangaben abgespeichert werden.

6. Vorrichtung nach einem der Ansprüche 1 bis 5, **dadurch gekennzeichnet, dass** in Abhängigkeit vom eingegebenen Kleidungsstück und/oder Geschlecht und/oder Alter vorbestimmte Abfragen zur Erfassung von vorbestimmten Längen ausgegeben werden und/oder dass in Abhängigkeit vom eingegebenen Kleidungsstück und/oder Geschlecht und/oder Alter vorbestimmte Eingaben zur Erfassung von vorbestimmten Längen aufgenommen werden.

7. Vorrichtung nach einem der Ansprüche 1 bis 6, **dadurch gekennzeichnet, dass** nach einem Einrasten des Bandmittels (1) in einer Halterung und/oder nach dem Ablauf einer vorbestimmten Haltezeit, insbesondere etwa 3 Sekunden, der Längen-messwert an ein Größenermittlungsprogramm weiterzugeben und zu verarbeiten ist.

8. Vorrichtung nach einem der Ansprüche 1 bis 7, **dadurch gekennzeichnet, dass** die Datenspeicherung über eine Zwischenspeicherung erfolgt und erst anschließend eine Verarbeitung erfolgt und/oder dass die ermittelten und berechneten Werte auf einem tragbaren Speicher auszugeben sind.

9. Verfahren zur Bestimmung von individuellen Kleidungsangaben wobei eine Vorrichtung (3) nach einem der Ansprüche 1 bis 8 eingesetzt wird und ein Bandmittel (1) ausgezogen wird und zugeordnete Positionsmesswerte des Bandmittels (1) mittels eines Sensormittels (2) erfasst werden, insbesondere korrespondierend mit vorbestimmten Längen, insbesondere des Körpers, insbesondere Körperhöhe und/oder Brustumfang und/oder Beinlänge und/oder Armlänge und/oder Kopfumfang und/oder Fußlänge und/oder Fußbreite und/oder Handlänge, wobei insbesondere wobei mittels eines vorbestimmten Startsignals, insbesondere die Eingabe einer Bestätigung, ein Beginn der Bestimmung eingeleitet wird und durch ein vorbestimmtes Endsignal ein Ende der Bestimmung und/oder dass das Sensormittel insbesondere in Form einer Fotodiode einen durch das Bandmittel (1) an vorbestimmten Stellen reflektierten Lichtstrahl eines Lichtmittels, insbesondere einen Laserstrahl, insbesondere eines Diodenlasers, erfasst.

10. Verfahren nach Anspruch 9, **dadurch gekennzeichnet, dass** das Bandmittel (1) mit überwiegend reflektierenden und überwiegend nicht-reflektierenden Bereichen ausgestattet ist, die insbesondere regelmäßig abwechselnd angeordnet sind, wobei insbesondere die entsprechenden Größen der Bereiche in einer Auswerteeinrichtung gespeichert sind und den Messungen des Sensormittels zugeordnen werden.

11. Verfahren nach einem der Ansprüche 9 oder 10, **dadurch gekennzeichnet, dass** die Sensormittel (2) über das Prinzip der Triangulation arbeiten und/oder dass der Auszug des Bandes über eine Lichtschranke registriert wird und/oder dass das Sensormittel (2) die Auszugslänge des Bandmittels (1) durch einen Winkelmesser erfasst, der insbesondere einem Rollenmittel zugeordnet wird, durch das das Bandmittel verläuft und/oder auf das das Bandmittel aufgerollt ist und/oder von dem es abgerollt wird.

12. Verfahren nach einem der Ansprüche 9 bis 11, **dadurch gekennzeichnet, dass** in eine Eingabevorrichtung Personenangaben eingegeben werden, insbesondere Geschlecht und/oder Alter und/oder Kleidungsstückwunsch, und aus einer Ausgabevorrichtung die individuellen Kleidungsangaben ausgegeben werden, insbesondere die Kleidungsgröße und/oder die Hutgröße und/oder die Schuhgröße und/oder dass korrespondierend zu den Abfragen zur Erfassung vorbestimmter Längen Positionsangaben zum Ansetzen des Bandmittels (1) am jeweiligen Körper ausgegeben werden und/oder dass die Messwerte des Sensormittels (2) jeweils in bezug zu den Positionsangaben abgespeichert werden.

13. Verfahren nach einem der Ansprüche 9 bis 12, **dadurch gekennzeichnet, dass** in Abhängigkeit vom eingegebenen Kleidungsstück und/oder Geschlecht und/oder Alter vorbestimmte Abfragen zur Erfassung von vorbestimmten Längen ausgegeben werden und/oder dass in Abhängigkeit vom eingegebenen Kleidungsstück und/oder Geschlecht und/oder Alter vorbestimmte Eingaben zur Erfassung von vorbestimmten Längen aufgenommen werden.

14. Verfahren nach einem der Ansprüche 9 bis 13, **dadurch gekennzeichnet, dass** das Endsignal **dadurch** gegeben ist, dass nach einem Einrasten des Bandmittels in einer Halterung und/oder nach dem Ablauf einer vorbestimmten Haltezeit, insbesondere etwa 3 Sekunden, der Längenmesswert an ein Größenermittlungsprogramm weitergegeben und verarbeitet wird.

15. Verfahren nach einem der Ansprüche 9 bis 14, **dadurch gekennzeichnet, dass** die Datenspeicherung über eine Zwischenspeicherung erfolgt und erst anschließend eine Verarbeitung erfolgt und/oder dass die ermittelten und berechneten Werte auf einem tragbaren Speicher ausgegeben werden.
